# EUROPEAN PATENT APPLICATION

(11) **EP 4 530 564 A1**
(43) Date of publication of application: **02.04.2025**
(21) Application number: 23306621.6
(22) Date of filing: 27.09.2023
(51) Int. Cl.: F26B 23/00, F26B 15/12, B01J 6/00, C04B 11/02

(54) **SYSTEMS AND METHODS FOR USE IN THE PRODUCTION OF A GYPSUM PRODUCT**

(71) Applicant: SAINT-GOBAIN PLACO, 92400 Courbevoie (FR)
(72) Inventor: CANTONNET, Jerome, 92400 Courbevoie (FR); HIEL-BERAUD, Hugo, 92400 Courbevoie (FR); MONTIGNY, Benoit, 92400 Courbevoie (FR)
(74) Representative: Murgitroyd & Company

(57) **Abstract**

A system for use in the production of a gypsum product is described, the system comprising a calciner for calcining gypsum; the calciner comprising at least one calciner exhaust; and a dryer comprising at least one dryer zone. The system is configured such that, in use, heat energy from calcination fumes within the at least one calciner exhaust heats, directly or indirectly, the at least one dryer zone. A method for use in the production of a gypsum product is also described.

## Description

### Field of the Disclosure

The present disclosure relates generally to systems and methods for use in the production of a gypsum product, and finds particular, although not exclusive, utility in providing systems and methods for the reuse of heat in calcination fumes in the drying process.

### Background

Industrial drying processes, for example the drying of gypsum products require significant amounts of energy. Industrial dryers can be composed of multiple zones that are maintained at different temperatures depending on the needs of the process. Providing the energy required to maintain such industrial dryers at the required temperatures is expensive. Additionally, there is a significant, negative environmental impact associated with current production techniques due to the amount of energy consumed.

Aspects of the present disclosure seek to provide systems and methods that alleviate these problems with prior known systems. In particular, aspects of the present disclosure seek to provide systems and methods for drying with increased energy efficiency.

### Summary

According to a first aspect of the present invention, there is provided a system for use in the production a gypsum product, the system comprising:
a calciner for calcining gypsum; the calciner comprising at least one calciner exhaust; and
a dryer comprising at least one dryer zone,
wherein the system is configured such that, in use, heat energy from calcination fumes within the at least one calciner exhaust heats, directly or indirectly, the at least one dryer zone.

When using a system of this form, heat energy from the calcination fumes that would usually be wasted can be used to partially, or fully, maintain a raised temperature in the at least one dryer zone to dry a gypsum product. In this way, the apparatus is more energy efficient than those of the prior art.

Preferably, the gypsum product is a gypsum board. A gypsum board is a board comprising at least 50 wt.% calcium sulphate dihydrate, more preferably at least 80 wt.% calcium sulphate dihydrate. More preferably, the gypsum board may have one or more facer layers. Still more preferably, the facer layer may comprise a paper or other cellulose based product

Preferably, the at least one dryer zone and the at least one calciner exhaust are fluidly connected. In this way, the calcination fumes within the calciner exhaust may directly heat the at least one dryer zone, as the calcination fumes can be directly introduced into the at least one dryer zone. Where heating is direct, this ensures the at least one dryer zone is heated efficiently by the calcination fumes within the calciner exhaust.

Preferably, the system comprises at least one heat exchanger. Preferably, the system comprises at least one heat pump. Preferably, the system comprises at least one thermal fluid loop. The use of a thermal fluid loop may be preferable as it may increase the ease with which the system can be installed or retrofitted where the calciner is located in a position relatively remote for the dryer.

Preferably, the at least one heat exchanger, heat pump or thermal fluid loop is configured such that, in use, heat energy is transferred from calcination fumes within the calciner exhaust to air entering the at least one dryer zone. The use of a heat exchanger, heat pump or thermal fluid loop may be preferable as the calcination fumes have a high level of humidity and/or may comprise undesirable contaminants. As such, the use of a heat exchanger, heat pump or thermal fluid loop may allow the environment within the dryer to be controlled more accurately and reliably during any production process using the system.

Preferably, the system comprises at least one dryer exhaust. In use the at least one dryer exhaust removes hot air from the dryer during the manufacturing process. Preferably, the system is configured such that, in use, heat energy from hot air within the at least one dryer exhaust heats, directly or indirectly, the at least one dryer zone.

Preferably, the at least one heat exchanger, heat pump or thermal fluid loop is configured such that, in use, heat energy is transferred from the air within the at least one dryer exhaust to the air entering the at least one dryer zone. In this way, the efficiency of the system can be further increased, as heat energy within the air exiting the system in the at least one dryer exhaust can be used to heat the air entering the at least one dryer zone. Alternatively, the system is configured such that the at least one dryer zone and the at least one dryer exhaust are fluidly connected.

Preferably, the system comprises a plurality of heat exchangers, heat pumps and/or thermal fluid loops, wherein the system is configured such that, in use, the air entering the at least one dryer zone is heated by air exiting the system in the dryer exhaust via a first heat exchanger, heat pump or thermal fluid system then heated in a second heat exchanger, heat pump or thermal fluid system by calcination fumes in the calciner exhaust. In this way, the efficiency of the system is once again increased.

Preferably, the system is configured, in use, to mix the calcination fumes with additional air. In this way, the temperature and/or humidity level of the calcination fumes can be controlled, moderated or adjusted before the calcination fumes are used to heat the at least one dryer zone. Such a feature may assist in increasing the reliability of the system, for example by reducing the risk of corrosion in key areas or be enabling additional control of the conditions within the at least one dryer zone where the calcination fumes are introduced there directly.

Preferably, the system is configured, in use, to mix the calcination fumes and additional air before the mixture is introduced to the at least one dryer zone. Such a feature may be advantageous in ensuring consistent conditions throughout a dryer zone. Alternatively, the system is configured, in use, to mix the calcination fumes and additional air within the at least one dryer zone. Such a feature may be advantageous as it can be more easily installed.

Preferably, the dryer comprises a plurality of dryer zones. More preferably the dryer comprises a first dryer zone, a second dryer zone and a third dryer zone. In such embodiments, a gypsum product would move through the first zone, the second zone, then the third zone during the production process. Preferably, in use, the first dryer zone and the second dryer zone are maintained at a higher temperature than the third dryer zone. Preferably, the first dryer zone and the second dryer zone are maintained at a higher humidity than the third dryer zone.

Preferably, during use, the first dryer zone is maintained at a temperature in the range of 200°C to 330°C inclusive. Preferably, during use, the first dryer zone is maintained at a humidity in the range of 100 g/kg to 600 g/kg inclusive.

Preferably, during use, the second dryer zone is maintained at a temperature in the range of 200°C to 330°C inclusive. Preferably, during use, the second dryer zone is maintained at a humidity in the range of 100 g/kg to 600 g/kg inclusive.

Preferably, during use, the third dryer zone is maintained at a temperature in the range of 100°C to 200°C inclusive. Preferably, during use, the third dryer zone is maintained at a humidity in the range of 20 g/kg to 500 g/kg inclusive.

Preferably, the at least one dryer zone comprises at least one dryer zone exhaust, wherein in use, the at least one dryer zone exhaust transfers heat energy from one dryer zone to another dryer zone. Preferably, the at least one dryer zone exhaust transfers air directly from one dryer zone to another. More preferably, the at least one dryer zone exhaust transfers heat energy from the first dryer zone and/or the second dryer zone to the third dryer zone.

Preferably, the at least one dryer zone comprises at least one preheater. More preferably, the at least one dryer zone comprises a plurality of preheaters. Still more preferably, the at least one dryer zone comprises a first preheater and a second preheater. Preferably, the first preheater is maintained at a temperature between 50°C to 150°C inclusive. Preferably, the second preheater is maintained at a temperature between 50°C to 150°C inclusive. Preferably, the first preheater is maintained at a humidity between 5 g/kg to 100 g/kg inclusive. Preferably, the second preheater is maintained at a humidity between 5 g/kg to 100 g/kg inclusive.

Preferably, the at least one preheater comprises at least one preheater exhaust. In use the at least one preheater exhaust removes hot air from the preheater during the manufacturing process. Preferably, the system is configured such that, in use, heat energy from hot air within the at least one preheater exhaust heats, directly or indirectly, the at least one dryer zone.

Preferably, the at least one heat exchanger, heat pump or thermal fluid loop is configured such that, in use, heat energy is transferred from the air within the at least one preheater exhaust to the air entering the at least one dryer zone. In this way, the efficiency of the system can be further increased, as heat energy within the air exiting the system in the at least one preheater exhaust can be used to heat the air entering the at least one dryer zone.

Preferably, the additional air is ambient, untreated air. More preferably, the system is configured to filter the additional air.

In some embodiments, the dryer is a longitudinal dryer. In some embodiments, the dryer is a transverse dryer. In some embodiments, the dryer is a jet dryer. Preferably the dryer is a longitudinal dryer.

Preferably, the system comprises a heater. Preferably, the heater is a gas burner. Alternatively the heater is a resistance heater. Preferably, the system is configured such the heater directly or indirectly heats at least one of the dryer zones. More preferably, the system may be configures such that supplemental air is heated via the heater, then that supplemental air is introduced into at least one of the dryer zones. In this way, the temperature of each zone can be controlled more accurately and/or increased if required.

Preferably, the method comprises directly or indirectly heating the at least one dryer zone with the heater. For example, the method may comprise heating supplemental air via the heater, then introducing this supplemental air into the at least one dryer zone.

According to a second aspect of the present invention, there is provided a method for use in the production of a gypsum product, the method comprising:
providing a calciner with at least one calciner exhaust;
providing a dryer with at least one dryer zone
calcining gypsum in the calciner; and
utilising heat energy from calcination fumes within the calciner exhaust to heat, directly or indirectly, the at least one dryer zone.

In this way, a method with the advantages hereinbefore described is provided. Preferably, the method comprises providing the apparatus as hereinbefore described. Preferably, the method is a method of manufacturing a gypsum board.

Preferably, the calcination fumes in the calciner exhaust have a temperature of 130°C to 170°C inclusive.

Preferably, the method comprises fluidly connecting the at least one dryer zone and the at least one calciner exhaust. In this way, the calcination fumes within the calciner exhaust may directly heat the at least one dryer zone, as the calcination fumes can be directly introduced into the at least one dryer zone. Where heating is direct, this ensures the at least one dryer zone is heated efficiently by the calcination fumes within the calciner exhaust.

Preferably, the method comprises providing at least one heat exchanger. Preferably, the method comprises providing at least one heat pump. Preferably, the method comprises providing at least one thermal fluid loop. Preferably, the method comprises transferring heat energy from calcination fumes within the calciner exhaust to air entering the at least one dryer zone via the at least one heat exchanger, heat pump or thermal fluid loop.

Preferably, the method comprises providing at least one dryer exhaust to remove hot air from the dryer during the manufacturing process. Preferably, the method comprises transferring heat energy from hot air within the at least one dryer exhaust, directly or indirectly, to the at least one dryer zone.

Preferably, the method comprises transferring heat energy from the air within the at least one dryer exhaust to the air entering the at least one dryer zone via at least one heat exchanger, heat pump or thermal fluid loop. Alternatively, the method comprises fluidly connecting the at least one dryer zone and the at least one dryer exhaust.

Preferably, the method comprises providing a plurality of heat exchangers, heat pumps and/or thermal fluid loops, wherein the air entering the at least one dryer zone is heated by air exiting the system in the dryer exhaust via a first heat exchanger, heat pump or thermal fluid system then heated in a second heat exchanger, heat pump or thermal fluid system by calcination fumes in the calciner exhaust.

Preferably, the method further comprises mixing the calcination fumes with additional air. More preferably, the calcination fumes and additional air are mixed before the mixture is introduced to the at least one dryer zone. Alternatively, the calcination fumes and additional air are mixed within the at least one dryer zone

Preferably, the method comprises maintaining the temperature in the at least one dryer zone between 100°C and 330°C. Preferably, wherein the method comprises maintaining the humidity in the at least one dryer zone between 10 g/kg and 600 g/kg.

Preferably, the method comprises providing a dryer with a plurality of dryer zones. More preferably, the method comprises maintaining each dryer zone at a different temperature and or humidity.

Preferably, the method comprises providing a dryer with a first dryer zone, a second dryer zone and a third dryer zone. In such embodiments, a gypsum product would move through the first zone, the second zone, then the third zone during the production process. Preferably, the method comprises maintaining the first dryer zone and/or the second dryer zone at a higher temperature than the third dryer zone. Preferably, the method comprises maintaining the first dryer zone and/or the second dryer zone at a higher humidity than the third dryer zone.

Preferably, the method comprises maintaining the first dryer zone at a temperature in the range of 200°C to 330°C inclusive. Preferably, the method comprises maintaining the first dryer zone at a humidity in the range of 100 g/kg to 600 g/kg inclusive.

Preferably, the method comprises maintaining the second dryer zone at a temperature in the range of 200°C to 330°C inclusive. Preferably, the method comprises maintaining the second dryer zone at a humidity in the range of 100 g/kg to 600 g/kg inclusive.

Preferably, the method comprises maintaining the third dryer zone at a temperature in the range of 100°C to 200°C inclusive. Preferably, the method comprises maintaining the third dryer zone at a humidity in the range of 20 g/kg to 500 g/kg inclusive.

Preferably, the method comprises providing at least one dryer zone exhaust. Here the method may comprise transferring heat energy from one dryer zone to another using the at least one dryer zone exhaust. More preferably, this heat transfer is direct.

Preferably, the at least one dryer zone exhaust transfers heat energy from a one dryer zone to another dryer zone. Preferably, the at least one dryer zone exhaust transfers air directly from one dryer zone to another. More preferably, the method comprises using the dryer zone exhaust to transfer heat energy from the first dryer zone and/or the second dryer zone to the third dryer zone.

Preferably, the at least one dryer zone comprises at least one preheater. More preferably, the at least one dryer zone comprises a plurality of preheaters. Still more preferably, the at least one dryer zone comprises a first preheater and a second preheater. Preferably, the method comprises maintaining the first preheater at a temperature between 50°C to 150°C inclusive. Preferably, the method comprises maintaining the second preheater at a temperature between 50°C to 150° inclusive. Preferably, the method comprises maintaining the first preheater at a humidity between 5 g/kg to 100 g/kg inclusive. Preferably, the method comprises maintaining the second preheater at a humidity between 5 g/kg to 100 g/kg inclusive.

Preferably, the method comprises providing at least one preheater exhaust. Preferably, the method comprises removing hot air from the preheater via the preheater exhaust. Preferably, the method comprises transferring heat energy from hot air within the at least one preheater exhaust, directly or indirectly, to the at least one dryer zone.

Preferably, the method comprises transferring heat energy from the air within the at least one preheater exhaust to the air entering the at least one dryer zone via at least one heat exchanger, heat pump or thermal fluid loop.

Preferably, the method comprises providing a heater. Preferably, the heater is a gas burner. Alternatively, the heater is a resistance heater. Preferably, the method comprises directly or indirectly heating at least one of the dryer zones with the heater. For example, the method may comprise heating supplemental air via the heater, then introducing this supplemental air into at least one of the dryer zones.

### Brief Description of the Drawings

The disclosure will be further described with reference to examples depicted in the accompanying figures in which:
Figure 1 is a schematic diagram showing a first embodiment of the present invention;
Figure 2 is a schematic diagram showing a second embodiment of the present invention;
Figure 3 is a schematic diagram showing a third embodiment of the present invention;
Figure 4 is a schematic diagram showing a fourth embodiment of the present invention;
Figure 5 is a schematic diagram showing a fifth embodiment of the present invention; and
Figure 6 is a schematic diagram showing a thermal fluid loop for use in embodiments of the present invention.

### Detailed Description

The following description presents particular examples and, together with the drawings, serves to explain principles of the disclosure. However, the scope of the invention is not intended to be limited to the precise details of the examples, since variations will be apparent to a skilled person and are deemed to be covered by the description. Terms for components used herein should be given a broad interpretation that also encompasses equivalent functions and features. In some cases, alternative terms for structural features may be provided but such terms are not intended to be exhaustive.

Descriptive terms should also be given the broadest possible interpretation; e.g. the term "comprising" as used in this specification means "consisting at least in part of' such that interpreting each statement in this specification that includes the term "comprising", features other than that or those prefaced by the term may also be present. Related terms such as "comprise" and "comprises" are to be interpreted in the same manner.

The description herein refers to examples with particular combinations of features, however, it is envisaged that further combinations and cross-combinations of compatible features between embodiments will be possible. Indeed, isolated features may function independently as an invention from other features and not necessarily require implementation as a complete combination.

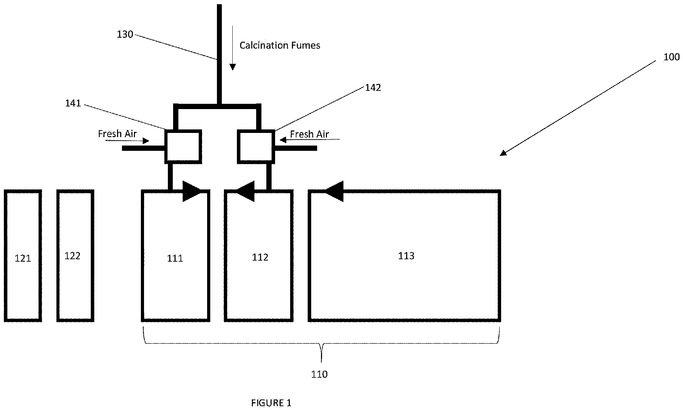

Figure depicts a system 100 in accordance with the present invention. The system comprises a longitudinal dryer 110 comprising a first dryer zone 111, a second dryer zone 112, and a third dryer zone 113. During use, hot air circulates in alternating directions in the first dryer zone 111 compared to the second dryer zone 112 and the third dryer zone 113 as indicated by the arrows in Figure 1.

The system 100 additionally comprises a first preheater 121 and a second preheater 122. The preheaters are located upstream of the first dryer zone 111, second dryer zone 112 and third dryer zone 113, such that a product to be dried, typically a gypsum board, first travels through the preheaters 121, 122 before travelling through the dryer 110. In use, the temperature in the first preheater 121 is maintained between 50°C to 150°C, the temperature in the second preheater 122 is maintained between 50°C to 150°C, the temperature in the first dryer zone 111 is maintained between 200°C to 330°C, the temperature in the second dryer zone 112 is maintained between 200°C to 330°C, and the temperature in the third dryer zone 113 is maintained between 200°C to 330°C.

As such, in use, the temperature in the preheaters 121, 122 and the dryer 110 is maintained above the ambient. In the embodiment of Figure 1, the temperature in the first dryer zone 111 and the second dryer zone 112 is maintained, in use, with the assistance of calcination fumes introduced into these zones via a calcination exhaust 130. The system 100 includes a calciner (not shown) that can be used to dehydrate gypsum at an elevated temperature. As calcination is conducted at an elevated temperature, the calcination fumes in the calciner exhaust 130 are at an elevated temperature, often in the range of 130°C to 170°C, and can therefore be used to maintain an above ambient temperature within the first dryer zone 111 and the second dryer zone 112. In the embodiment of Figure 1, the calcination exhaust 130 is fluidly connected to the first dryer zone 11 and the second dryer zone 112, such that the calcination fumes enter the zones to increase their temperature in a form of direct heating. In this way, the energy efficiency of the system 100 may be increased.

As well as an elevated temperature, the calcination fumes have a high humidity, frequently in the range of 50 g/kg to 1000 g/kg. The main aim of the dryer 100 is to dry the gypsum product in a controlled manner to ensure a consistent final product. As such as well as the temperature of the dryer zones, controlling the humidity within the zones is also of significant importance. As such, the system 100 of Figure 1 also includes a first mixing zone 141 and a second mixing zone 142, where the calcination fumes provided within the calciner exhaust 130 are mixed with additional air. As such, the temperature and humidity of the air entering the first dryer zone 111 and second dryer zone 112 can be independently controlled via adjusting the ratio of calcination fumes to additional air introduced into the zones. Whilst in the embodiment depicted in Figure 1 the mixing zones are located outside of the first dryer zone 111 and the second dryer zone 112, it is also envisaged that the mixing zones may be with the dryer zones and the calcination fumes and additional air introduced into the dryer zones via separate inlets.

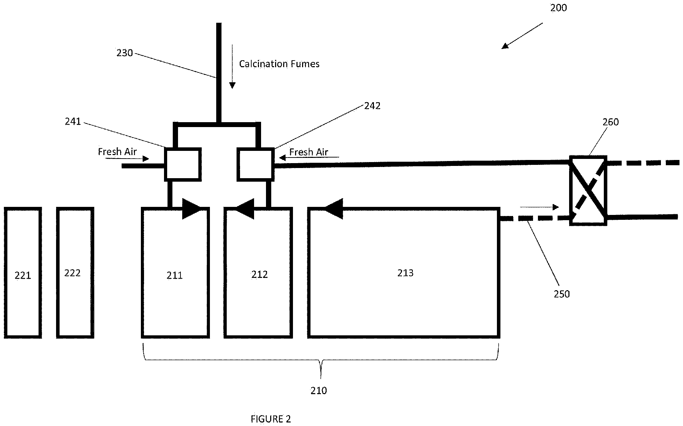

Figure 2 illustrates a second system 200 in accordance with the present invention. The system 200 of Figure 2 includes all the same features as the system 100 of Figure 1, each of these features numbered with equivalent reference numerals.

The system 200 of Figure 2 additionally includes a dryer exhaust 250 extending from the third dryer zone 213. Whilst in Figure 2 the dryer exhaust is seen extending from the third dryer zone 213, it is envisaged that the dryer exhaust may extend from any one or more of the dryer zones. Here, the dryer exhaust 250 carries air from the third dryer zone 213, this air being at a temperature above the ambient. The dryer exhaust 250 carries this air to a heat exchanger 260, where heat from the air in the dryer exhaust 250 is transferred to the additional air that will be mixed with the calcination fumes and introduced into the dryer 200, here to the first dryer zone 211 and the second dryer zone 212. As such, there is a further increase in efficiency, as waste heat in the air within the dryer exhaust 250 is used to preheat the additional air before it is mixed with the calcination fumes. Whilst a heat exchanger is used in the present embodiment, a heat pump would be appreciated as an alternative.

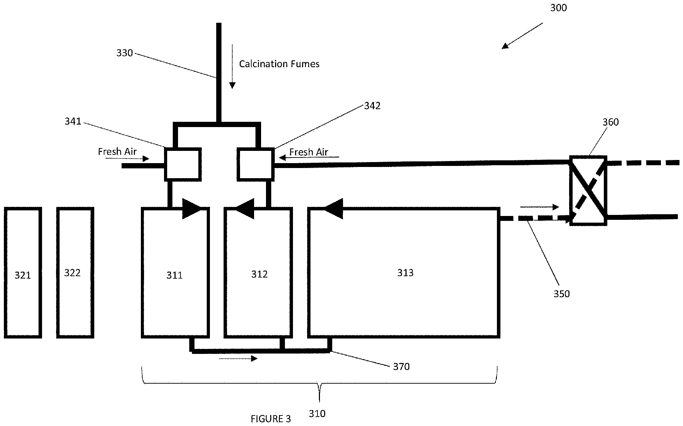

Figure 3 illustrates a third system 300 in accordance with the present invention. The system 300 of Figure 3 includes all the same features as the system 200 of Figure 2, each of these features numbered with equivalent reference numerals.

The system 300 of Figure 3 additionally includes a dryer zone exhaust 370, the dryer zone exhaust transferring air from the first dryer zone 311 and the second dryer zone 312 to the third dryer zone 313. Whilst in Figure 3 the dryer zone exhaust extends from both the first 311 and second 312 dryer zones, it is also envisaged that it may extend from only one of the same. As the first dryer zone 311 and the second dryer zone are above the temperature of the third dryer zone 313, the dryer zone exhaust may be used to maintain the temperature of the third dryer zone 313 whilst reducing the energy usage of the system 300 as a whole.

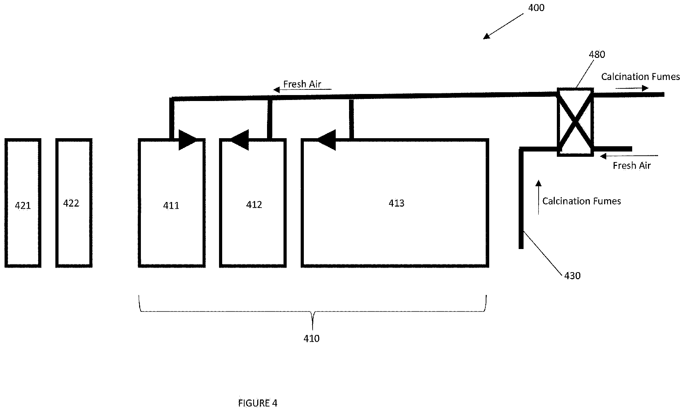

Figure 4 illustrates a fourth system 400 in accordance with the present invention. The system 400 of Figure 4 includes a number of features identical to those previously described and, where this is the case, these features are numbered with equivalent reference numerals.

The system 400 of Figure 4 uses the calcination fumes carried in the calciner exhaust 430 to indirectly heat the first dryer zone 411, second dryer zone 412 and third dryer zone 413.

The calciner exhaust is fluidly connected to both the calciner (not shown) and a heat exchanger 480 where heat energy from the calcination fumes is transferred to additional air to be introduced into the dryer zones 411, 412, 413. In this way, heat energy wastage is reduced by the system 400, increasing its efficiency. Additionally, as the calcination fumes do not directly enter the dryer zones 411, 412, 413, conditions within the dryer zones in terms of humidity and temperature may be more easily controlled in the system of Figure 4.

Whilst not shown, it is also envisaged that the system 400 of Figure 4 may additionally include a dryer zone exhaust as described in relation to Figure 3.

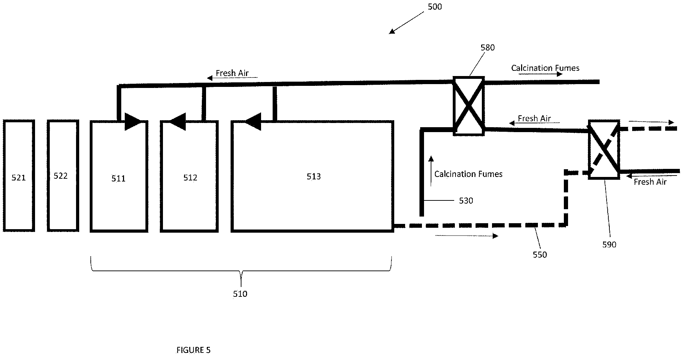

Figure 5 illustrates a fifth system 500 in accordance with the present invention. The system 500 of Figure 5 includes all the same features as the system 400 of Figure 4, each of these features numbered with equivalent reference numerals.

The system 500 of Figure 5 additionally includes a dryer exhaust 550 extending from the third dryer zone 513. Whilst in Figure 5 the dryer exhaust is seen extending from the third dryer zone 513, it is envisaged that the dryer exhaust may extend from any one or more of the dryer zones. Here, the dryer exhaust 550 carries air from the third dryer zone 513, this air being at a temperature above the ambient. The dryer exhaust 550 carries this air to a heat exchanger 590, where heat from the air in the dryer exhaust 550 is transferred to the additional air entering the dryer 510. In the system 500 of Figure 5, the additional air entering the dryer zones 511, 512, 513 is heated by two heat exchangers 590, 580 in series. First the additional air is heated in a heat exchanger 590 using otherwise waste energy in the air within the dryer exhaust 550, before the additional air is heated again in the heat exchanger 580 using otherwise waste energy in the calcination fumes in the calciner exhaust 530.

Whilst not shown, it is also envisaged that the system 500 of Figure 5 may additionally include a dryer zone exhaust as described in relation to Figure 3.

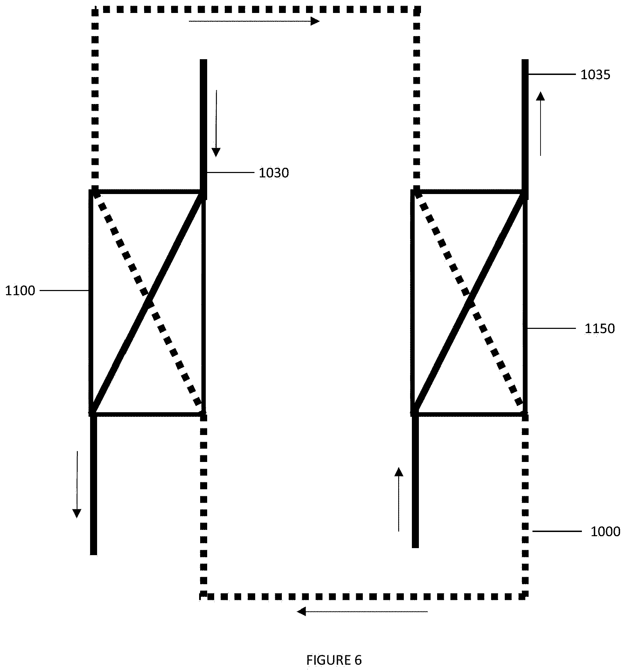

Figure 6 depicts a thermal fluid loop 1000 that may be used in a system according to the present invention. Whilst individual heat exchangers can be used to transfer heat between the various fluid flows described in the previous embodiments, a thermal fluid loop 1000 can also be used. In Figure 6, heat energy from the calcination fumes within the calciner exhaust 1030 can be transferred to a thermal fluid within the thermal fluid loop 1000 in a first heat exchanger 1100. This thermal energy in the thermal fluid is then transferred to the additional air that will be introduced into the dryer zones in a second heat exchanger 1150. The use of a thermal fluid loop may facilitate the installation of systems according to the present invention where the calciner is remote from the dryer.

The invention is not limited to the specific examples or structures illustrated. For example, the at least one dryer zone may comprise a preheater and the system may be configured to use the heat energy from the calcination fumes to heat the preheaters.

## Claims

1. A system for use in the production of a gypsum product, the system comprising:
a calciner for calcining gypsum; the calciner comprising at least one calciner exhaust; and
a dryer comprising at least one dryer zone,
wherein the system is configured such that, in use, heat energy from calcination fumes within the at least one calciner exhaust heats, directly or indirectly, the at least one dryer zone.

2. The system of claim 1, wherein the at least one dryer zone and the at least one calciner exhaust are fluidly connected.

3. The system of claim 1 or claim 2, wherein the system comprises at least one heat exchanger or thermal fluid loop.

4. The system of claim 3, wherein the at least one heat exchanger or thermal fluid loop is configured such that, in use, heat energy is transferred from calcination fumes within the calciner exhaust to air entering the at least one dryer zone.

5. The system of claim 3 or claim 4, wherein the system comprises a dryer exhaust, and the at least one heat exchanger or thermal fluid loop is configured such that, in use, heat energy is transferred from the air within the dryer exhaust to the air entering the at least one dryer zone.

6. The system of any one preceding claim, wherein the system is configured, in use to mix the calcination fumes with additional air.

7. The system of claim 6, wherein the system is configured, in use, to mix the calcination fumes and additional air before the mixture is introduced to the at least one dryer zone.

8. The system of claim 6, wherein the system is configured, in use, to mix the calcination fumes and additional air within the at least one dryer zone.

9. The system of any one preceding claim, wherein the dryer comprises a plurality of dryer zones.

10. The system of claim 9, wherein at least one dryer zone comprises at least one dryer zone exhaust, wherein in use, the at least one dryer zone exhaust transfers heat energy from a one dryer zone to another dryer zone.

11. A method for use in the production of a gypsum product, the method comprising:
providing a calciner with at least one calciner exhaust;
providing a dryer with at least one dryer zone
calcining gypsum in the calciner; and
utilising heat energy from calcination fumes within the calciner exhaust to heat,
directly or indirectly, the at least one dryer zone.

12. The method of claim 11, wherein the method further comprises mixing the calcination fumes with additional air.

13. The method of claim 11 or claim 12, wherein the method comprises maintaining the temperature in the at least one dryer zone between 100°C and 330°C.

14. The method of any one of claims 11 to 13, wherein the method comprises maintaining the humidity in the at least one dryer zone between 10 g/kg and 600 g/kg.

15. The method of any one of claims 11 to 14, wherein the method comprises providing a dryer with a plurality of dryer zones, and further comprises maintaining each dryer zone at a different temperature and or humidity.
